Europäisches Patentamt

(19) European Patent Office

Office européen des brevets

(11) Numéro de publication: **0 208 610**
**B1**

(12) **FASCICULE DE BREVET EUROPEEN**

(45) Date de publication du fascicule du brevet: **22.11.90**

(51) Int. Cl.⁵: **G 01 N 21/53**, G 01 S 17/88

(21) Numéro de dépôt: **86401467.5**

(22) Date de dépôt: **02.07.86**

(54) **Dispositif de détection de substances étrangères à travers une paroi et système d'aide à la conduite de véhicules ou d'aéronefs.**

(30) Priorité: **04.07.85 FR 8510277**
**17.02.86 FR 8602093**

(43) Date de publication de la demande:
**14.01.87 Bulletin 87/03**

(45) Mention de la délivrance du brevet:
**22.11.90 Bulletin 90/47**

(84) Etats contractants désignés:
**DE FR GB IT SE**

(56) Documents cités:
**EP-A-0 083 544**
**FR-A-2 187 120**
**FR-A-2 214 897**
**FR-A-2 248 515**
**GB-A-2 034 884**
**US-A-4 099 875**

(73) Titulaire: **JAEGER**
**2, rue Baudin**
**F-92303 Levallois-Perret (FR)**

(72) Inventeur: **Bezard, Jean-Jacques**
**11 Rue des Bois aux Petits Chênes**
**F-78400 Chatou (FR)**
Inventeur: **Feppon, Philippe**
**17, rue Galvani**
**F-75017 Paris (FR)**
Inventeur: **Rodionoff, Pierre**
**141, rue Saint-Denis**
**F-92400 Courbevoie (FR)**

(74) Mandataire: **Martin, Jean-Jacques et al**
**Cabinet REGIMBEAU 26, Avenue Kléber**
**F-75116 Paris (FR)**

Courier Press, Leamington Spa, England.

# EP 0 208 610 B1

**Description**

La présente invention est relative à un dispositif de détection de la présence de substances étrangères au voisinage de la face d'une paroi de séparation entre un premier milieu et un deuxième milieu.

Jusquà ce jour les dispositifs de déctection de substances étrangères telles que des dépôts sur parois ou analogues utilisant des systèmes optiques se sont, pour l'essentiel, bornés à une détection par tout ou rien de la transmissivité de la paroi transparente à un rayonnement électromagnétique de test en l'absence d'une seule substance de dépôt à détecter.

Dans les cas où il est nécessaire de procéder à la détection de plusieurs substances, notamment d'une substance solide ou liquide, ou d'état physique intermédiaire, susceptible de se déposer sur la paroi, et d'une autre substance telle qu'une vapeur, des particules solides et/ou des aérosols en suspension dans le deuxième milieu, la détection de l'une et/ou de l'autre des substances n'est plus possible en raison de l'effet de masquage ou de saturation réciproque des détecteurs correspondants de l'une des substances par rapport à l'autre, notamment dans le cas de densités relatives très différentes des deux substances.

On a en particulier proposé dans un article intitulé "Mesure de la visibilité par capteur à microprocesseur" publié par S. Caine dans la reveue "Toute l'Electronique" n° 474 de mai 1982, un dispositif permettant de détecter la présence d'un aérosol ou du brouillard en atmosphère libre.

Si ce dispositif permet effectivement d'obtenir la détermination d'un coefficient d'absorption d'un rayonnement électromagnétique représentatif de la densité de l'aérosol ou du brouillard, celui-ci doit exclusivement être utilisé soit en atmosphère libre, soit directemente dans une enceinte dans laquelle la présence de l'aérosol ou du brouillard doit être détectée.

L'utilisation extérieurement à cette atmosphère libre ou à l'enceinte précitèe, donc nécessairement à travers des parois limitant une telle atmosphère ou enceinte, ne peut, en aucun cas, être envisagée. L'utilisation d'un tel dispositif en atmosphère libre ou dans une enceinte à atmosphère polluante ou corrosive ne peut, non plus, être valablement envisagée.

La présence invention a pour but de remédier aux inconvénients précités par la mise en oeuvre d'un dispositif de détection de la présence de substances étrangères au voisinage d'une paroi de séparation entre un premier et un deuxième milieu, les substances et le dispositif étant séparés par la paroi.

Un autre objet de la présente invention est la mise en oeuvre d'un dispositif permettant la détection dans un même milieu, d'une première susbtance susceptible de ce dèposer sur l'une des faces d'une paroi de séparation de ce milieu, dit deuxième milieu, d'un autre milieu, dit premier milieu, dans lequel est placé le dispositif, et/ou d'une deuxième substance telle qu'une vapeur, des particules solides ou des aérosols en suspension dans ce même deuxième milieu.

Un autre objet de la présente invention est la mise en oeuvre d'un système d'aide à la conduite de véhicules ou aéronefs mettant en oeuvre le dispositif de détection précité.

Le dispositif de détection de la présence de substances étrangères au voisinage de la face d'une paroi de séparation entre un premier et un deuxième milieu, les substances étant localisées dans le premier et/ou deuxième milieu, est remarquable en ce qu'il comprend, côté face premier milieu de la paroi, des moyens d'illumination de ladite paroi, au moyen d'une source de rayonnement électromagnétique dont la longueur d'onde correspond à la transparence ou à la semi-transparence du matériau constitutif de la paroi, ces moyens permettant l'illumination de la face externe de la paroi par un faisceau d'illumination selon une zone d'illumination de référence. Des premiers moyens détecteurs directionnels sensibles au rayonnement électromagnétique, et dont le cône de réception permet, au niveau de la face deuxième milieu de la paroi, de couvrir sensiblement la zone d'illumination de référence, sont prévus, la direction moyenne du cône de réception présentant par rapport à la direction moyenne du faisceau d'illumination, un inclinaison telle que la volume résultant de l'intersection du faisceau d'illumination et du cône de réception au delà de la face deuxième milieu de la paroi soit minimum.

L'invention trouve application à l'aide à la conduite de véhicules ou aéronefs pour la détection de premières substances de givre, de dépôts gras ou poussièreux constituant des salissures du pare-brise et éventuellement de deuxièmes substances telles que le brouillard, la fumèe, ou analogues, les substances étant situées à l'extérieur de l'habitacle du véhicule et le dispositif étant situé à l'intérieur de celui-ci au voisinage du pare-brise. Il trouve une application particulièrement avantageuse pour la surveillance de processus chimiques, pharmaceutiques ou de fabrication de produits alimentaires ou autres dans lesquels la détection de substances dans un récipient présentant au moins une paroi transparente ou semi-transparente sur laquelle les substances du premier type peuvent se déposer ou précipiter alors que les susbtances du deuxième type à surveiller sont susceptibles d'apparaître dans le récipient ou enceinte précité.

L'invention sera mieux comprise à la lecture de la description ci-après et à l'observation des dessins dans lesquels:

la figure 1 représente un schéma relatif à un mode de réalisation d'un dispositif objet de l'invention plus spècifiquement destiné à la détection de substances solides liquides ou pâteuses susceptibles de se déposer ou de précipiter sur une face correspondante de la paroi,

la figure 2 représente un schéma relatif à un mode de réalisation préférentiel d'un dispositif objet de l'invention, plus particulièremem destiné à la direction de l'une et/ou l'autre des substances de premier type solide, liquide, pâteux, susceptibles de déposer ou de précipiter sur la face correspondante de la paroi

2

et de deuxième type vapeur, particules solides, aérosols en suspension dans le deuxième milieu en présence et/ou en l'absence de l'autre substance et réciproquement.

la figure 3 représente une vue de face de la face de séparation paroi-deuxième milieu, face sur laquelle la zone d'illumination de réception Z et la trace des cônes de réception de premier et deuxième moyens de détection a été représenté,

la figure 4 représente, en coupe selon un plan longitudinal, une vue du dispositif complet muni de ses accessoires mécaniques,

la figure 5 représente un schéma synoptique fonctionnel d'un système de détection, objet de l'invention, pouvant être utilisé avantageusement pour l'aide à la conduite de véhicules ou aéronefs,

les figures 6a, 6b, 6c représentent un détail de réalisation préférentiel du système tel que représenté en figure 5,

les figures 7a, 7b, 7c représentent des abaques ou réseaux de valeurs permettant le traitement des signaux détectés représentatifs de la substance du premier, respectivement deuxième type, pour une application ou utilisation particulière déterminée,

la figure 8a représente une installation d'un détecteur de brouillard, à bord d'un véhicule et la figure 8b est relative à la détection de brouillard avec éventuellement commande automatique des feux arrière de brouillard avec clignotement si V est très faible ou véhicule à l'arrêt,

la figure 9a représente un compteur de vitesse de visibilité et de vitesse conseilée dans la brouillard et la figure 9b représente un agencement particulier de l'ergonomie du système,

la figure 10 représénte une vue du dispositif détecteur de l'avant du véhicule;

la figure 11 représente un vue un dispositif détecteur de l'arrière du véhicule,

la figure 12 représente une coupe de la figure 10, dans le cas d'une optique Cassegrain,

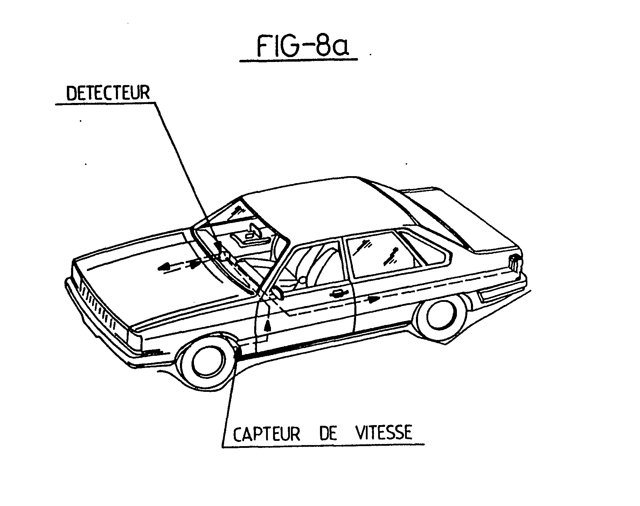

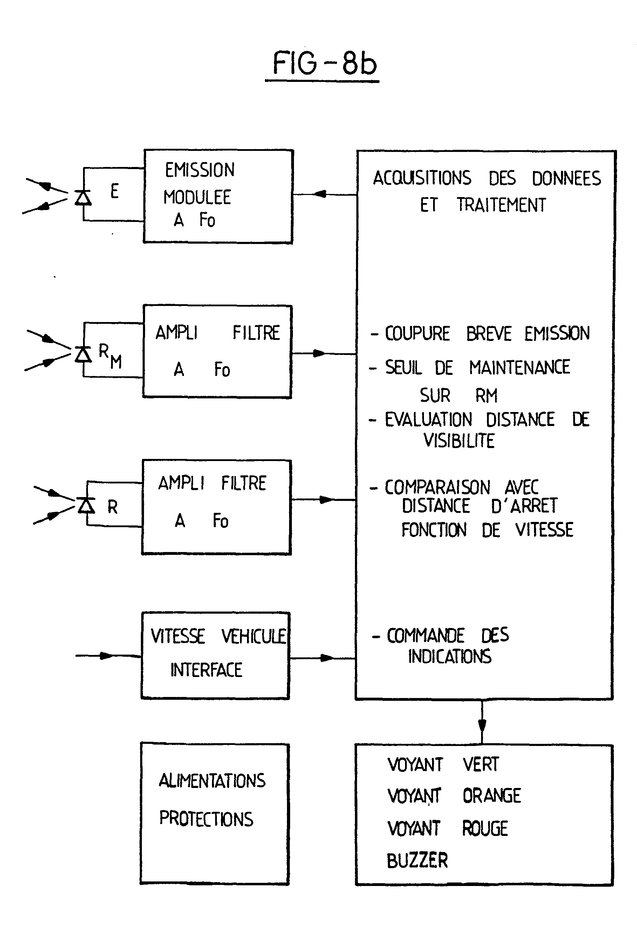

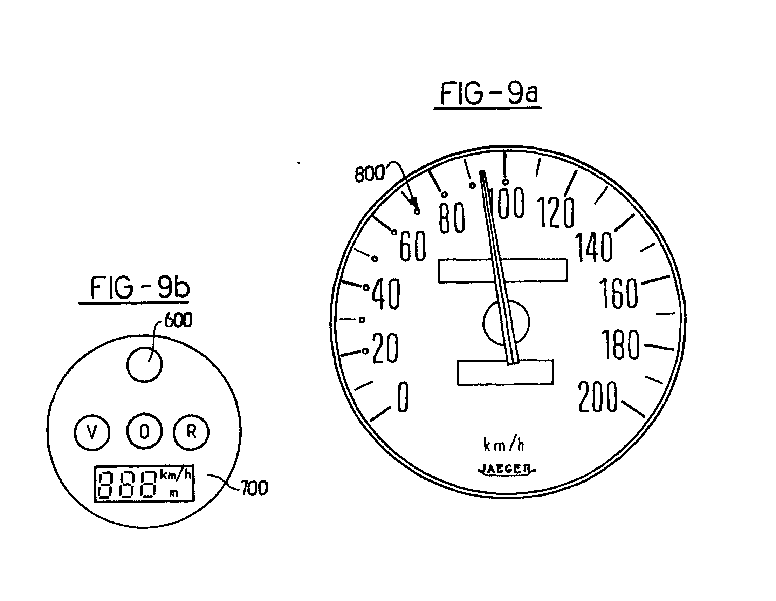

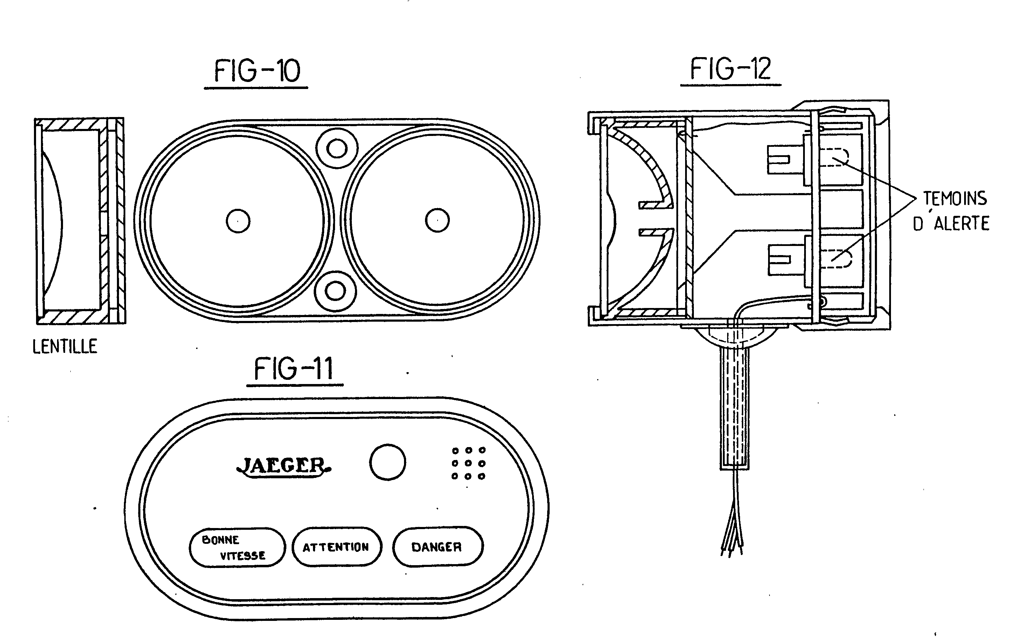

les figures 8 à 12 sont plus spécialement relatives à l'ergonomie du système objet de l'invention, dans le cas où celui-ci est utilisé pour l'aide à la conduite de véhicule.

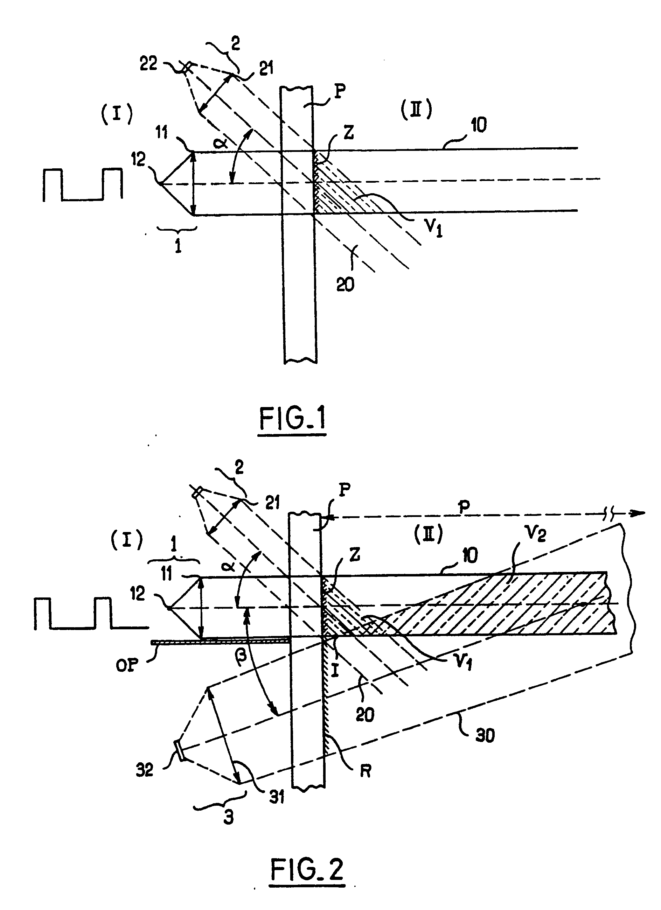

Le dispositif de détection de la présence de substances étrangères au voisinage de la face d'une paroi de séparation entre un premier et un deuxième milieu sera tout d'abord décrit en liaison avec la figure 1.

Sur cette figure, la paroi de séparation entre le premier milieu noté I et la deuxième milieu noté II, est elle-même notée P. De manière arbitraire, non limitative, la paroi est représentée par une lame à face parallèle P. Dans la présente description, les substances étrangères sont réputées localisées dans le deuxième milieu II. Bien entendu, la localisation des substances étrangères dans le milieu I et/ou le milieu II est absolument arbitraire, le dispositif de détection étant par exemple disposé dans le milieu dans lequel les susbtances étrangères ne sont pas présentes.

Conformément à l'invention, le dispositif de détection comprend, côté face premier milieu I de la paroi P, des moyens, notés 1, d'illumination de la paroi P, au moyen d'une source de rayonnement électromagnétique, dont la longueur d'onde correspond à la transparence ou à la semi-transparence du matériau constitutif de la paroi. A titre d'exemple non limitatif, la paroi P peut être constituée par une paroi de verre et le rayonnement électromagnétique peut être constitué par tout rayonnement dans la spectre visible ou dans le spectre invisible proche, tel que l'infrarouge proche par exemple.

Ainsi qu'il apparait en outre en figure 1, les moyens 1 d'illumination permettent l'illumination de la face externe de la paroi P, c'est-à-dire la face de la paroi P côté deuxième milieu II, par un faisceau d'illumination noté 10 selon une zone d'illumination de référence, notée Z. Bien entendu, la zone d'illumination de référence notée Z est située sur la face précitée de la paroi.

En outre, des premiers moyens détecteurs directionnels notés 2, sensibles au rayonnement électromagnétique et dont le cône de réception noté 20 permet au niveau de la face deuxième milieu II de la paroi P de couvrir sensiblement la zone d'illumination de référence Z sont prévus. Ainsi qu'il apparaît clairement en figure 1, la direction moyenne du cône de réception 20 présente, par rapport à la direction moyenne du faisceau d'illumination 10, une inclinaison notée $\alpha$ telle que le volume $V_1$ résultant de l'intersection du faisceau d'illumination 10 et du cône de réception 20 au delà de la face deuxième milieu II de la paroi est minimum.

Ainsi, pour une intensité d'illumination li, les premiers moyens détecteurs 2 reçoivent, en fonction de la présence de l'une et/ou de l'autre substance de premier ou de deuxième type, un énergie $E_s$ vérifiant la relation (I):

$$E_S = a_2 K(1-RS)^2 li + c_2.K.RS(1-RS)li + d_2.K.RS.^2 li + b_2.RS.li$$

Dans cette relation, l'expression $a_2 \times K \times (1 - RS)^2 \times li$ représente l'énergie reçue par les premiers moyens détecteurs en tenant compte des pertes par transmission à travers la paroi et la première substance ou substance de premier type déposée sur la zone d'illumination de référence Z, mais sans tenir compte de l'énergie ainsi diffusée qui pourrait être récupérée. De même, l'expression $b2 \times RS \times li$ représente l'énergie de diffusion en provenance de la paroi et reçue par les premiers moyens détecteurs, la substance de premier type déposée sur la paroi P se comportant alors comme une source étendue de lumière. De la même façon, l'expression $c_2 \times K \times RS \times (1-RS) \times li + d_2 \times K \times RS^2 \times li$ représente l'énergie de diffusion provenant des pertes par transmission à travers la substance de premier type déposée sur la zone d'illumination de référence Z, puis rétrodiffusée par la substance de deuxième type et captée par le détecteur. Dans la relation précitée et dans les différentes expressions précédemment explicitées, les

coefficients tels que $a_2$, $b_2$, $c_2$ et $d_2$ sont des coefficients dépendant essentiellement de la géométrie du système.

Afin d'assurer une détection optimale de la substance de premier type déposée ou précipitée sur la paroi et en particulier sur la face milieu II de cette paroi au niveau de la zone d'illumination de référence Z , il est avantageux, dans la relation précitée, de rendre minimale le somme des deux premières expressions précédemment explicitées et au contraire de rendre maximale la troisième expression précédemment citée. Il est en particulier avantageux, conformément à la présente invention, de prévoir une inclinaison de la direction moyenne du faisceau d'illumination 10 par rapport à l'inclinaison moyenne de cône de réception 20 des premiers moyens détecteurs, telle que le volume $V_1$, précédemment décrit, soit minimum afin de minimaliser l'énergie lumineuse rétrodiffusée par la substance de deuxième type éventuellement en suspension dans la deuxième milieu noté II. On comprendra ainsi que la détection de la substance de premier type déposee sur la paroi notamment au niveau de la zone d'illumination de référence Z peut ainsi être assurée indépendamment de la présence ou de l'absence d'une ou de toute substance de deuxième type en suspension dans le deuxième milieu noté II.

Afin d'obtenir une bonne définition de la zone d'illumination de référence Z, il est avantageux d'utiliser un faisceau d'illumination 10 de section sensiblement cylindrique. De la même manière, et afin d'assurer un recouvremenet convenable de la zone d'illumination de référence Z par le cône de réception 20 des moyens détecteurs 2, le cône de réception 20 précité peut avantageusement être sensiblement convergent à la réception. Par cône sensiblement convergent à la réception, on entend un cône convergent dans la direction de propagation d'un rayonnement donnée, contenu dans le cône de réception, vers les moyens détecteurs 2.

Ainsi qu'il a été précédemment décrit, le faisceau d'illumination 10 peut être constitué par un faisceau de lumière composite dans le domaine du spectre visible. Il peut également avantageusement être constitué par un faisceau d'illumination sensiblement monochromatique.

Afin d'assurer un taux de réjection suffisant des signaux détectés au rayonnement parasite susceptible d'être rencontré dans tout environnement industriel ou autre, il est avantageux, conformément à la présente invention, de prévoir un faisceau d'illumination modulé en amplitude à une fréquence de modulation déterminée. A titre d'exemple non limitatif, la fréquence de modulation pourra être choisie, pour une réalisation mettant en jeu des composants électroniques de type classique, jusqu'à des valeurs atteignant 500 kHz. De préférence, et afin d'obtenir un taux de réjection particulièrement important aux fréquences parasites d'illumination des éclairages publics ou analogues, il est avantageux de choisir une fréquence de modulation non multiple de 100 Hertz, toute fréquence pouvant, en dehors des valeurs précitées, a priori être utilisée.

Ainsi qu'il apparaît en outre en figure 1, les premiers moyens détecteurs comportent avantageusement, mais de façon non limitative, une lentille de focalisation 21, une diode ou un ensemble de diodes photoréceptrices 22, sensibles au rayonnement du faisceau d'illumination 10, et capables d'engendrer un signal électrique modulé à la fréquence de modulation du faisceau. Les premiers moyens détecteurs 2 comportent en outre un filtre de fréquence centrale centrée sur la valeur de la fréquence de modulation et délivrant un signal filtré. Des moyens de détection sont en outre capables d'engendrer un signal sensiblement continu, représentatif de l'amplitude du signal filtré détecté. Une description plus détaillée des moyens électroniques utilisés en aval des moyens détecteurs proprement dits, décrits et représentés en liaison avec la figure 1, sera donnée ultérieurement dans la description.

Ainsi qu'il apparaît en outre en figure 1, les moyens d'illumination 1 comportent, par exemple, une diode photoémissive, notée 12, et une lentille de focalisation notée 11, la diode photoémissive notée 12 et la lentille de focalisation 11 étant disposées de façon à engendrer un faisceau d'illumination sensiblement cylindrique.

En outre, ainsi qu'on pourra l'observer en figure 1, l'axe optique de la lentille de focalisation des premiers moyens détecteurs 2 et l'axe optique de la lentille de focalisation des moyens d'illumination 1 sont concourants, sensiblement au centre de la zone d'illumination de référence Z, et forment un angle α inférieur à 60°. La valeur de 60° précitée dépend notamment de la nature des substances de premier type susceptibles de se déposer sur la paroi P correspondante et de la nature du deuxième milieu.

Les lentilles de focalisation 11 et 21, la diode photoémissive 12 et la diode photoréceptrice 22 peuvent être enfermées dans des tubes opaques à la longueur d'onde du rayonnement d'illumination, ces tubes formant monture. Les tubes précités peuvent présenter à une de leurs extrémités une ouverture suffisante pour permettre l'application de ces derniers sur la face premier milieu I de la paroi P en vis-à-vis de la zone d'illumination de de référence Z. Une description plus détaillée de l'agencement mécanique du dispositif de l'invention sera décrit ultérieurement dans la description.

Le dispositif de détection, objet de l'invention, tel que représenté en figure 1, est remarquable en ce qu'il permet la détection de substances étrangères, telles que des substances solides, liquides ou pâteuses déposées ou précipitées sur la face deuxième milieu II de la paroi P, notamment dans la zone d'illumination de référence Z, en présence ou en l'absence d'une ou éventuellement plusieurs substances de deuxième type en suspension dans la milieu II. La valeur minimale du volume $V_1$ d'intersection entre le faisceau d'illumination 10 et le cône de réception 20 des moyens détecteurs 2 permet alors d'éviter tout phénomène de saturation du détecteur 2 en raison du phénomène de rétro-diffusion du rayonnement véhiculé par le faisceau d'illumination 10.

4

En particulier, le dispositif tel que représenté en figure 1, permet avantageusement la détection de substances étrangères déposées sur le pare-brise d'un véhicule ou d'un aéronef, sur la paroi vitreuse d'un récipient permetant la conduite d'un processeu chimique industriel ou analogue.

Un mode de réalisation particulièrement avantageux de l'objet de l'invention sera maintenant décrit en liaison avec la figure 2.

Conformément à cette figure, le dispositif de détection, objet de l'invention, comprend en outre, côté face premier milieu I de la paroi P, des deuxièmes moyens détecteurs directionnels, notés 3, sensibles au rayonnement d'illumination.

Ainsi, pour une même intensité d'emission li ou énergie émise, la relation (II) relative à l'énergie rétrodiffusée par la substance du deuxième type est vérifiée:

$$E_b = a_1K.(1-RS)^2.li + c_1.K.RS.(1-RS).li + d_1.K.RS^2.li$$

Dans cette relation les coefficients a1, b1, c1 représentent des coefficients relatifs à la géométrie du système.

Dans les relations (I) et (II) précédentes, les coefficients K et RS représentant respectivement

les coefficient de transmission de la lumière ou énergie d'illumination de la substance de deuxième type en suspension dans le milieu II,

le coefficient de perte par transmission de la substance de premier type déposée ou précipitée sur la paroi P au voisinage de la zone d'illumination de référence Z. Ce coefficient est défini par le rapport de l'énergie incidente, diminuée de l'énergie transmise, à l'énergie incidente. Il varie de zéro, dans le cas d'une paroi propre, c'est-à-dire en l'absence de dépôt de substances de premier type à 1 dans le cas de l'opacité totale.

Le coefficient K de transmission de la lumière ou énergie d'illumination de la substance de deuxième type en suspension dans le milieu II s'écrit selon la relation (III):

$$K = \frac{4}{v}$$

pour une longueur d'onde située dans le spectre visible ou proche infrarouge.

Dans cette relation, v représente la visibilité exprimée en mètre pour un longueur d'onde d'illumination considérée.

Pour obtenir une sensiblité de détection maximum de la substance de deuxième type, il est donc nécessaire de rendre maximum l'énergie reçue par les moyens détecteurs précités, en fonction de la géométrie du système. Dans ce but, le cône de réception 30 des deuxièmes moyens détecteurs 3, permet de définir, au niveau de la face deuxième milieu, une zone R de réception adjacente à la zone d'illumination de référence Z. De manière avantageuse, la direction moyenne du cône de réception précité, présente par rapport à la direction moyenne du faisceau d'illumination, une inclinaison telle que le volume V2 résultant de l'intersection du faisceau d'illumination 10 du cône de réception 30, au delà de la face deuxième milieu de la paroi P, soit maximum. Ainsi, l'énergie rétrodiffusée par la substance de deuxième type pour une géométrie donnée, peut être rendue maximale et la sensibilité de détection ainsi optimalisée.

A titre d'exemple non limitatif, les deuxièmes moyens détecteurs 3 peuvent comporter une lentille de focalisation 31 et une diode photoréceptrice 32 ou un ensemble de diodes, sensibles au rayonnemente du faisceau d'illumination 10, et capable d'engendrer un signal électrique modulé à la fréquence de modulation du faisceau 10. De manière analogue au circuit de détection connecté en aval des premiers moyens détecteurs, les circuits de détection connectés en aval des deuxièmes moyens détecteurs 3 peuvent comporter un filtre de fréquence centrale fixée sur la fréquence de modulation du faisceau d'illumination et des moyens de détection capables d'engendrer un signal continu représentatif de l'amplitude du signal modulé détecté.

Une description plus détaillée des circuits connectés en aval des deuxièmes moyens détecteurs 3 sera donnée ultérieurement dans la description.

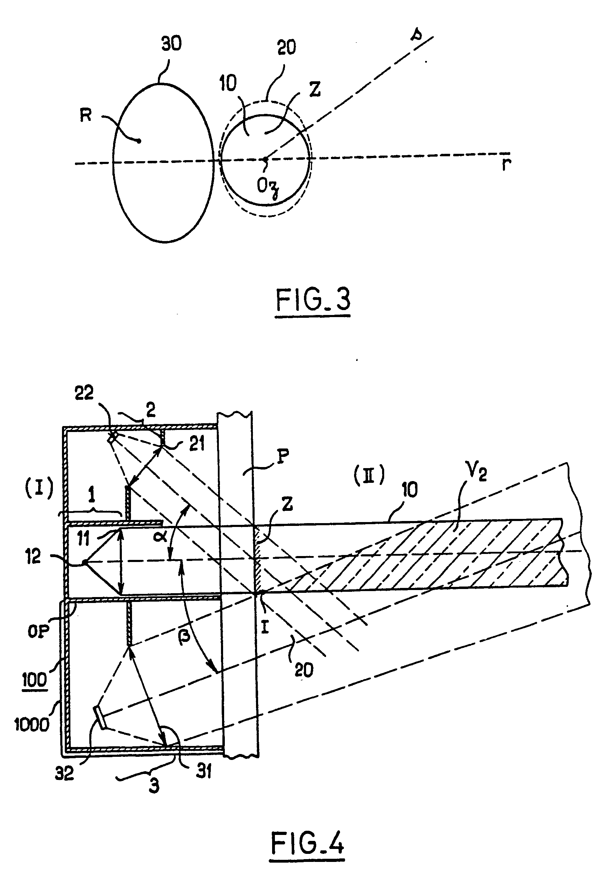

Ainsi qu'il apparaît en outre en figure 3, l'axe optique de la lentille de focalisation 31 des deuxièmes moyens détecteurs 3 et l'axe optique de la lentille de focalisation des moyens d'illumination 1 sont concourants et forment un angle β inférieur à 15°. Bien entendu, l'inclinaison peut être choisie la plus faible possible, de façon à rendre maximum le volume V2 précédemment décrit et en conséquence la quantitée d'énergie rétrodiffusée susceptible d'être détectée dans le cône de réception 30 par les deuxièmes moyens détecteurs 3.

Sur cette figure, l'axe Oz, représenté par un point, représente en fait l'axe du faisceau d'illumination 10, l'axe Or représente la projection dans le plan de la figure, de l'axe du cône de réception 30 et de la zone de réception R précédemment décrite, et l'axe Os, représenté également en trait mixte, représente la projection dans le plan de la figure de l'axe du cône de réception 20 précédemment décrit. Ainsi, on remarquera, conformément à la figure 3, mais de manière non limitative, que les axes des lentilles de focalisation des moyens d'illumination et les axes de premiers et deuxièmes moyens de détection sont situés dans deux plans sécants distincts, ainsi qu'il est représenté sur la figure 3. Bien entendu, ces axes peuvent éventuellement être disposés de façon que les plans correspondants soient confondus dans un même plan. La disposition particulière telle que représentée en figure 3, permet en particulier d'assurer une meilleure compacité du dispositif. Si nécessaire, une orientation particulière, notamment, du faisceau d'illumination en fonction d'impératifs tels que l'illumination d'une zone du milieu II est déterminée en vue notamment d'éviter l'éblouissement ou dans le cas d'une illumination en rayonnement infrarouge, l'illumination intempestive d'objectifs fragiles, tels que par exemple des individus.

Selon un mode de réalisation particulièrement avantageux de l'objet de l'invention, les lentilles de focalisation 21 et 11 des premiers moyens de détection 2 et des moyens d'illumination 1 ont sensiblement un même diamètre d'ouverture. En outre, la lentille de focalisation 31 des deuxièmes moyens de focalisation 3 peut comporter un diamètre d'ouverture supérieur à un rapport 3 vis-à-vis du diamètre d'ouverture de la lentille de focalisation 11 des moyens d'illumination 1. Ces dispositions permettent en particulier d'assurer à la fois un volume V1 minimum et et un volume V2 maximum, ainsi qu'il a été précédemment décrit.

En outre, le point d'intersection Ii des génératrices adjacentes, dans le premier milieu I du faisceau d'illumination et du cône de réception des deuxièmes moyens détecteurs 3 est situé dans le deuxième milieu II au voisinage de la face deuxième milieu de la paroi. Par génératrice adjacente, on entend bien sûr les génératrices du faisceau d'illumination 10 et du cône de réception 30 les plus proches, c'est-à-dire celles qui sont représentées sur la figure 2, dans le milieu I. Ainsi, avantageusement, le point Ii peut être situé à quelques centimètres de la face milieu II de la paroi P ainsi qu'il est représenté sur la figure 2. De cette façon, la zone de réception R est immédiatement adjacente à la zone d'illumination de référence Z est permet ainsi de tenir compte de l'apparition de la substance de premier type déposée tant sur la zone d'illumination de référence Z que sur la zone de réception R.

En fonction de l'application souhaitée du dispositif de détection objet de l'invention, tel que représenté en figure 2, il est avantageux de régler l'angle d'inclinaison β entre l'axe du faisceau d'illumination 10 et l'axe du cône de réception 30, de façon que le point d'intersection le plus éloigné entre le faisceau 10 et le cône 30 soit situé à une distance p, appelée portée, représentative des conditions d'utilisation du dispositif de détection. En effet, cette portée est choisie de façon que dans les conditions d'utilisation de géométrie du faisceau d'illumination et des cônes de reception, le signal détecté au niveau des deuxièmes moyens détecteurs 3 soit suffisant pour permettre une représentation convenable de la densité de la substance de type deux en suspension dans le milieu II. Ainsi, dans le cas de l'utilisation pour l'aide à la conduite d'automobiles ou d'aéronefs, il pourrait être avantageux de régler la distance p à quelques mètres, alors qu'au contraire dans le cas de l'utilisation du dispositif pour l'aide à la conduite de processus industriel, la distance p pourra être avantageusement choisie égale à quelques centimètres.

En outre, afin d'assurer une protection des deuxièmes moyens détecteurs de l'énergie lumineuse rétrodiffusée par la substance de premier type déposée sur la zone d'illumination de référence Z ainsi que de l'énergie lumineuse éventuellement réfléchie par la surface premier milieu de la paroi P, les génératrices adjacentes précédemment décrites situées dans le premier milieu I du faisceau d'illumination et du cône de réception 30 peuvent avantageusement être physiquement séparées par une paroi opaque, notée OP, à la longueur d'onde du rayonnement d'illumination. Bien entendu et de façon non limitative, ainsi qu'il est représenté avantageusement en figure 4, la paroi OP peut être agencée en forme de tube noté 100, le tube enveloppant en outre les deuxièmes moyens détecteurs et présentant au niveau de ces derniers un blindage électromagnétique 1000. On remarquera d'ailleurs que sur la figure 4, le tube peut être agencé en forme de boîtier, de façon à assurer la cohésion mécanique de l'ensemble constitué par les moyens d'illumination 1, les premiers moyens détecteurs 2 et les deuxièmes moyens détecteurs 3. Le blindage électromagnétique 1000 représenté de manière partielle sur la figure 4, peut bien entendu de manière avantageuse, être étendu à l'ensemble du boîtier, afin notamment d'assurer un blindage des circuits de détection, qui seront décrits ultérieurement dans la description, aux perturbations électromagnétiques parasites. Ce blindage est d'autant plus utile que selon un mode de réalisation particulier, pour une émission à la longueur d'onde de 930 nanomètres avec un puissance d'émission de 15 mW/stéradian émis sur l'axe du faisceau d'illumination, la puissance du signal de rétrodiffusion reçue, et donc captée par les deuxièmes moyens de détection 3, varie entre 100 et 2 nWatt. Dans ces conditions, le niveau de détection du signal détecté par la photodiode 32 ne dépasse pas quelques microvolts. Les résultats précédents ont été obtenus lors de la détection d'une substance de deuxième type telle qu'une vapeur d'eau, toute substance telle qu'un aérosol ou des particules solides telles que notamment des fumées en suspension dans le deuxième milieu II, pouvant en outre être également détectées. Dans ce cas, les premiers 2 et deuxièmes 3 moyens détecteurs sont alors couplés électroniquement de façon que le signal détecté délivré par les premiers moyens détecteurs 2 constituent un signal de correction de référence, vis-à-vis du signal détecté délivré par les deuxièmes moyens détecteurs 3. Le signal corrigé est al'ors représentatif de la seule rétrodiffusion du faisceau d'illumination, par le deuxième substance étrangère en suspension dans le deuxième milieu II.

Dans le but d'assurer une optimalisation du niveau de bruit des signaux détectés et en particulier réduire celui-ci au maximum afin d'obtenir une sensiblité optimale du système, il peut être avantageux de prévoir que l'émission du rayonnement d'illumination soit effectuée en lumière polarisée rectilignement, à partir d'un polariseur. La réception au niveau des premiers et/ou deuxièmes moyens détecteurs 2, 3, est alors effectuée au moyen d'un analyseur orienté de façon à provoquer une atténuation de l'énergie lumineuse reçue par réflexion sur la paroi P.

En outre, et de façon avantageuse, le faisceau d'illumination 10 peut être engendré par rapport à la paroi P sous incidence de Brewster, le polariseur ou les analyseurs étant alors supprimés.

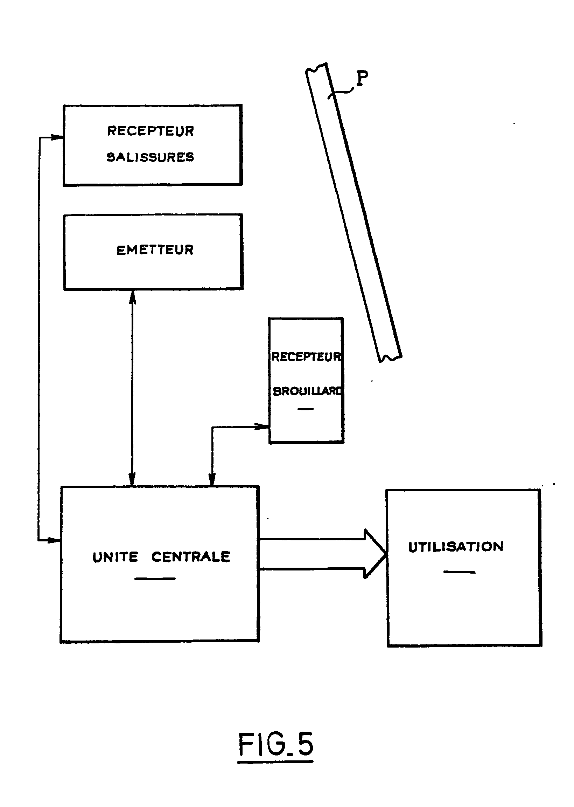

Une description générale d'un systeme de détection conforme à la présente invention, sera maintenant décrit à l'aide du schéma synoptique fonctionnel représenté en figure 5.

Le système de détection présentement décrit, pourra être utilisé avantageusement pour l'aide à la conduite de véhicules ou aèronefs, notamment. Dans ce cas particulier, les substances de premier type seront dénommées salissures, c'est-à-dire ce sont des substances telles que des poussières ou des particules grasses qui se déposent sur le pare-brise du véhicule ou de l'aéronef. Dans le cas d'un véhicule automobile, le dispositif formant récepteur de brouillard pourra également être logé, de manière avantageuse, dans l'un des phares du véhicule, à proximité de la paroi vitreuse de celui-ci.

Conformément au schéma précité, le système comporte un récepteur de salissures constitué par exemple par les premiers moyens détecteurs 2 précédemment décrits, ainsi qu'un émetteur constitué par des moyens d'illumination 1 précédemment décrits. Il peut bien entendu avantageusement comporter également un récepteur dit récepteur de brouillard, constitué par les deuxièmes moyens détecteurs précédemment décrits. L'ensemble des éléments précités est relièe à une unité centrale permettant le traitement des signaux délivrés par les éléments précédemment décrits, et leur exploitation au niveau d'une utilisation.

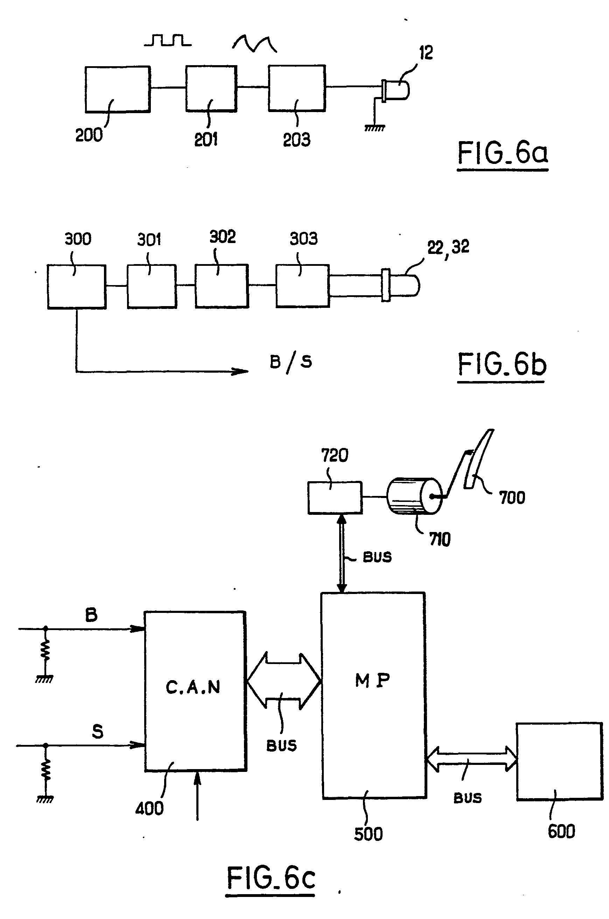

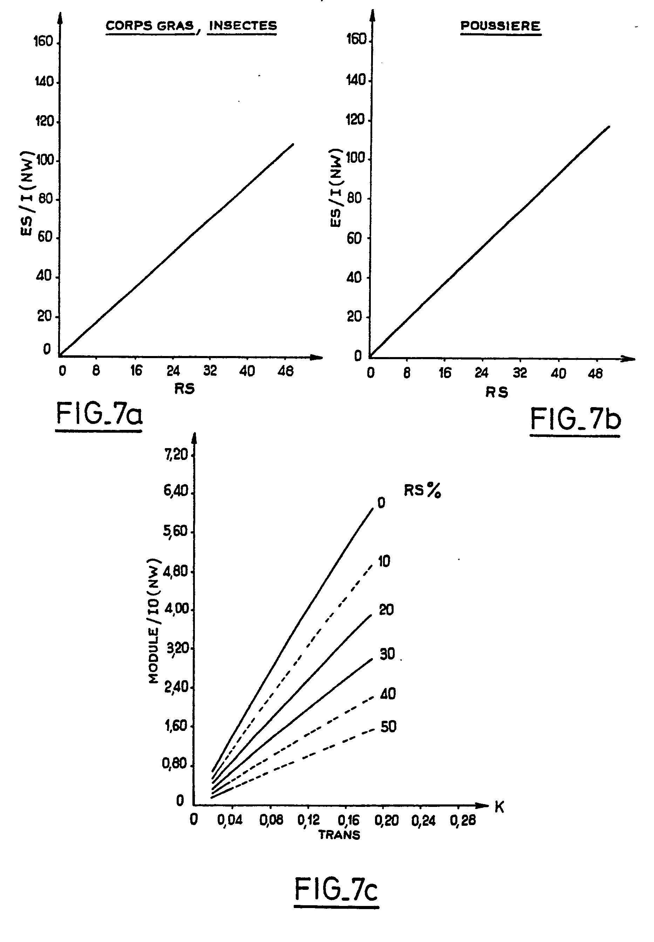

Un mode de réalisation détaillé du système tel que représenté en figure 5 sera donné en liaison avec la description des figures 6a, 6b, 6c et des figures 7a, 7b, 7c.

Ainsi qu'il apparaît en figure 6a, les moyens d'illumination comportent par exemple un oscillateur de modulation noté 200, délivrant un signal rectangulaire de modulation à une fréquence donnée inférieure à 500 KHz. La fréquence peut être choisie de manière non limitative à 2350 Hertz. L'oscillateur 200 attaque un filtre passe-bas 201, lequel permet d'attaquer un amplificateur de courant 203 relié à une ou plusieurs diodes photoémissives notées 12. L'amplificateur de courant 203 peut être réglé de façon à délivrer à la diode photoémissive 12 un courant de l'ordre de 260 mA afin d'assurer, à la longeur d'onde de 930 nannomètres, une puissance d'émission moyenne de l'ordre de 15 mW/stéradian.

En outre, de manière avantageuse, les récepteurs tels que décrits en figure 5 peuvent comprendre à partir de la photodiode de réception notée 22 ou 32, un circuit de détection noté 303, des moyens amplificateurs 302, un filtre 301 centré sur la fréquence de modulation des signaux d'illumination et enfin, des moyens de démodulation notées 300, permettant de délivrer un signal alternatif représentatif en amplitude de l'intensité des signaux détectés. A titre d'exemple non limitatif, le circuit de détection 303 peut avantageusement être constitué par un circuit du type resonnant parallèle directement connecté sur la diode photoréceptrice 22 ou 32. L'amplifacteur 302 peut être constitué par un amplificateur à très haute impédance d'entrée et à très faible courant "d'offset" ou de décalage, l'amplificateur constituant en outre un amplificateur à faible bruit. Il peut avantageusement être constitué par un amplificateur opérationnel, comprenant un étage d'entrée de type transistor à effet de champ à impédance d'entrée supérieure à 100 G ohms et à courant d'"offset" ou de décalage del'ordre de 50 pA. Dans la mesure ou les signaux détectés sont détectés dans un milieu bruité, et ou il faut en outre amplifié un signal de très faible niveau, ainsi que précédemment décrit, il est nécessaire que le filtre 301 soit un filtre très sélectif et particulièrement stable. Celui-ci peut être constitué par des filtres à capacité commutée à très grande stabilité et de bandes passantes faibles de l'ordre de 50 Hertz. Le circuit de démodulation 300 permet, à partir du signal filtré, d'obtenir un signal continu, du manière classique, de façon à délivrer une tension continue proportionnelle à l'amplitude du signal filtré. Sur la figure 6b, on a représenté les signaux notés B et S respectivement proportionnels à l'énergie détectée, par les premiers moyens de détection 2 et deuxièmes moyens de détection 3. On comprendra que le signal B est relatif au signal rétrodiffusé par le brouillard, et le signal S est relatif au signal rétrodiffusé par les salissures.

Une description plus détaillée et de l'unité central de traitement, telle que représentée en figure 5, sera décrite en liaison avec la figure 6c.

Sur cette figure, les signaux B et S précédemment décrits en figure 6b, sont reçus par des moyens convertisseurs analogiques-numériques notés CAN et référencés 400, lesquels sont reliés par une liaison de type BUS à microprocesseur de traitement noté 500. Le microprocesseur 500 peut être muni de circuits périphériques et notamment de mémoires auxiliaires, permettant le calcul du coefficient de transmission des substances de deuxième type et en particulier du brouillard, coefficient K, et du coefficient de perte par transmission RS caractéristique des salissures. Ces deux coefficients sont mémorisés dans les mémoires auxiliaires du microprocesseur 500 en un réseau de valeurs ou abaque tel que représenté en figure 7a, 7b, respectives relativement à des corps gras ou insectes et à des poussières pouvant se déposer ou se fixer sur le pare-brise du véhicule ou de l'aéronef et de transmission K pour une substance de deuxième type tel que de la vapeur d'eau pour différentes valeurs du coefficient de perte par transmission RS exprimé en pour cent. Sur les figures 7a, 7b et 7c, les ordonnées sont graduées en nanowatts et les abscisses respectivement pour les figures 7a et 7b sont graduées en valeur du coefficient de perte par transmission RS, alors que l'abcisse pour la figure 7c est graduée envaleur de K. Un programme permet alors à partir des valeurs mesurées de RS en pour cent et des valeurs correspondantes des signaux B et S, de déterminer la valeur du coefficient de transmission K et conformément à la relation III, la valeur de la visibilité v. Selon l'utilisation nécessaire, en fonction de la valeur de la visibilité et/ou en fonction de la valeur du coefficient de transmission K, une commande peut être réalisée pour assurer différentes fonctions dans la véhicule ou dans l'aéronef. Ces fonctions peuvent être par exemple commande automatique du lave-glace, lors de l'apparition d'un coefficient de perte par transmission RS de grande valeur, supérieure à 20 à 30% par exemple, commande d'alimentation du feu anti-brouillard arrière en fonction de la valeur du coefficient de transmission K et modulation de l'intensité lumineuse de celui-ci en fonction de la valeur du coefficient de transmission K et, les cas échéant, de la vitesse réelle du véhicule. Sur la figure 6c, on a représenté les essuie-glace du véhicule ou de l'aéronef en 700. Conformément à une variante avantageuse de réalisation de l'invention, le moteur de commande d'essuie-glace 710 peut être relié à un circuit de détection du courant ou de la tension d'alimentation du moteur d'essuie-glace 710, ce circuit de détection étant lui-même relié par l'intermédiaire d'une liaison BUS par exempl'e, ou microprocesseur 500. Ainsi, à la mise en route des essuie-glace du véhicule ou de l'aéronef, le balayage périodique du pare-brise, par le balai d'essuie-glace en particulier, a pour effet d'introduire des valeurs périodiquement erronées des mesures de coefficient RS ainsi que en conséquence du coefficient de transmission K. Afin de remédier à l'erreur ainsi introduite par la mise en route des essuie-glace, il est avantageux, à partir du courant ou de la tension d'alimentation du moteur 710, d'effectuer une correction synchrone, par exemple, aux valeurs détectées par l'intermédiaire du circuit de détection 720. En outre, il est également possible, en l'absence d'une telle détection synchrone, d'effectuer un relevé au niveau des valeurs mémorisées dans les mémoires auxiliaires du microprocesseur 500, afin de détecter les valeurs périodiquement maximales mesurées. Ces valeurs maximales peuvent dans le cas où la périodicité correspond sensiblement à la périodidcté du balayage d'essuie-glace, être supprimées ou corrigées en conséquence, à partir d'un programme adapté à cet effet.

En outre, une fonction supplémentaire peut consister en ce que le circuit d'utilisation permet par exemple d'afficher pour le conducteur du véhicule une vitesse conseillée en fonction de la visibilité. La réalisation pratique des fonctions précitées à partir des valeurs des paramètres ou coefficient de transmission K et de perte par transmission RS, par rapport à des valeurs de seuil déterminées, met en oeuvre des dispositifs ou circuits de type classique et en conséquence ne sera pas décrite plus en détail.

Une description ergonomique du système dans le cas où celui-ci est destiné à l'aide à la conduite de véhicule sera donnée en liaison avec les figures 8a à 12.

A partir de l'information visibilité et de l'information vitesse, il est possible d'indiquer au conducteur, en fonction des caractéristiques nominales de la voiture, s'il roule trop vite par rapport à la visibilité.

Dialogue par voyant et buzzer trois voyants s'allument dans les conditions suivantes:

vert      V< Vitesse conseillée,
orange    Vitesse conseillée<V<Vitesse conseillée + 10 km/h
rouge     V>Vitesse conseillée + 10 km/h

avec les voyant rouge le buzzer se met en route. En l'absence de brouillard, aucun voyant n'est allumé. Un quatrième voyant de maintenance indique si le système doit être nettoyé.

Un perfectionnement du système précédent consiste en complément à indiquer par vignette LCD la vitesse conseillée et la distance de visibilité en clair.

Dialogue sur la compteur de vitesse

Ce système consiste à adjoindre sur le compteur de vitesse des diodes électro-luminescentes de 10 en 10 km/h et de faire indiquer à l'une d'élles la vitesse conseillée, quand il y a du brouillard. La comparaison avec l'aiguille permet d'apprécier la marge de sécurité. Le buzzer se met en action pour V> V conseillée + 10 km/h. Ce dispositif pourrait également être utilisé à d'autres fins de vitesse conseillée fonction de la fluidité du trafic par exemple, transmise par balise (cf. thème A: information routière).

Commande du feu arrière de brouillard

L'un des systèmes de dialogue avec le conducteur précédemment décrit peut être complété d'un système d'indication à l'arrière du véhicule, permettant aux véhicules venant de l'arrière d'être mieux prévenus. Ce système commande les feux arrières antibrouillard et les fait clignoter.

Si V<Vitesse conseillée — 20 km/h ou lors d'une brusque opacification du brouillard

La densité lumineuse de traumatisme rétinien pour Lambda<1,4 micromètre est habituellement fixée à 0,1 W/cm2. Nus envisageons en émetteur de puissance Pe<20 mW, surface de la pupile d'émission >5 cm2 soit 4 mW/cm2 à distance zéro>soit 1/25 de la dose permanente traumatistante.

Exemple à 10 m ouverture de faisceau d'ouverture 15 milliradians soit 1 dégre: diamètre 150 mm section du faisceau 176 cm2. Soit P/S = 0,11 mW/cm2, soit 0,001 de la dose maxi

Afin de limiter encore davantage le risque d'exposition permanente, le système pourrait être stoppée à vitesse faible; et/ou fonctionner à puissance réduite en cas d'écho proche, ou encore utiliser une optique d'émission plus encombrante<s>50 cm2) supprimant le risque.

Note: la puissance émise par le dispositif de la première réalisation ne devrait pas dépasser un milliwatt.

Le spécification de base est, naturellement, de détecter l'obstacle, mais surtout de fournir au

EP 0 208 610 B1

conducteur des indications de vitesse conseillée lui permettant l'acquisition visuelle de celui-ci en sécurité, de façon à procéder manuellement à son évitement.

Cette phase critique d'"approche en sécurité" implique la bonne connaissance des paramètres de l'obstacle et du véhicule: vitesses propres, distance relative, ou, de façon dégradée, le couple "incertain" distance-vitesse de rapprochement, sous réserve qu'il ne remette pas en cause la sécurité de l'approche, en particuler en présence d'echos multiples.

Compte-tenu des spécifications demandées d'une façon générale aux détecteurs d'obstacles, on peut distinguer deux grands cas:

l'obstacle est mobile, à distance et vitesse de rapprochement faible. Le terme distance est prépondérant sur le terme vitesse de rapproachement.

l'obstacle est à très faible vitesse propre et grande distance. Le terme important est la vitesse de rapprochement élevée, nécessitant une détection précoce.

On en déduit immédiatement les qualités nécessaires au dispositif:

à faible distance, l'information Doppler est quantitivement de faible intérêt, et d'ailleurs difficilement disponible au voisinage de battement zéro. Par contre, la télémetrie doit être bonne.

à grande distance, la télémetrie précise est moins importante, comparée à l'information qualitative d'"obstacle arrête".

La difficulté essentielle étant alors de ne pas confondre l'obstacle avec le paysage (ou pire dans le paysage).

Les qualités en résumé sont: bonne télémétrie, information Doppler facultative si la télémétrie est dérivable, bonne directivité, élimination des échos de sol. Les deux réalisations correspondent à des technologies sophistiquées et des coûts de composants et de systèmes élevés.

Les dessins joints illustrent schématiquement l'invention et font apparaître des particularités qui font partie de l'invention.

On a ainsi décrit un dispositif de détection permettant la détection de substances étrangères à un milieu, l'une des substances pouvant se déposer sur une paroi de séparation du milieu, et l'autre substance restant en suspension dans le milieu considéré. Ce dispositif apparaît particulièrement avantageux en ce qu'il permet des applications très larges, telles que notamment l'aide à la conduite de véhicule, en l'absence de visibilité, ainsi que la surveillance et la conduite de processus industriel, processus de l'industrie chimique notamment, dans lesquels le passage de substances de phase vapeur à phase solide doit être détecté.

## Revendications

1. Dispositif de détection de la présence de substances étrangères au voisinage de la face d'un paroi (P) de séparation entre un premier (I) et un deuxième milieu (II), les substances étant localisées dans le premier ou le deuxième milieu, caractérisé en ce qu'il comprend, côté face premier milieu de ladite paroi:

des moyens (1) d'illumination de ladite paroi au moyen d'une source de rayonnement électromagnétique dont la longueur d'onde correspond à la transparence ou à la semi-transparence du matériau constitutif de la paroi, lesdits moyens permettant l'illumination de la face externe de la paroi par un faisceau l'illumination (10) selon une zone d'illumination de référence (Z),

des premiers moyens détecteurs directionnels (2) sensibles audit rayonnement électromagnétique et dont le cône de réception (20) permet, au niveau de la face deuxième milieu de la paroi, de couvrir sensiblement ladite zone d'illumination de référence (Z), la direction moyenne dudit cône de réception présentant, par rapport à la direction moyenne du faisceau d'illumination, une inclinaison ($\alpha$) telle que le volume ($V_1$) résultant de l'intersection de faisceau d'illumination et du cône de réception au delà de la face deuxième milieu de la paroi est minimum.

2. Dispositif selon la revendication 1, caractérisé en ce que le faisceau d'illumination (10) est sensiblement cylindrique.

3. Dispositif selon l'une des revendications 1 ou 2, caractérisé en ce que le cône de réception (20) des moyens détecteurs (2) est sensiblement convergent à la réception.

4. Dispositif selon l'une des revendications 1 à 3, caractérisé en ce que le faisceau d'illumination (10) est sensiblement monochromatique.

5. Dispositif selon l'une des revendications 1 à 4, caractérisé en ce que le faisceau d'illumination (10) est modulé en amplitude à une fréquence de modulation determinée.

6. Dispositif selon la revendication 5, caractérisé en ce que les moyens détecteurs (2) comportent:

une lentille de focalisation (21)

une diode photoréceptrice (22) sensible au rayonnement dudit faisceau d'illumination et capable d'engendrer un signal électrique modulé à la fréquence de modulation du faisceau,

un filtré (301) de fréquence centrale centrée sur la valeur de la fréquence de modulation, et délivrant un signal filtré,

des moyens de détection capables d'engendrer un signal sensiblement continu représentatif de l'amplitude du signal filtré détecté.

7. Dispositif selon la revendication 6, caractérisé en ce que les moyens d'illumination (1) comportent:

9

une diode photo-émissive (12)

une lentille de focalisation (11), la diode photo-émissive (12) et la lentille de focalisation (11) étant disposées de façon à engendrer un faisceau d'illumination sensiblement cylindrique (10).

8. Dispositif selon l'une des revendications 6 et 7, caractérisé en ce que l'axe optique de la lentille de focalisation (21) des moyens détecteurs (2) et l'axe optique de la lentille de focalisation (11) des moyens d'illumination (1) sont concourants et forment un angle $\alpha$ inférieur à 60°.

9. Dispositif selon l'une des revendications 6 à 8, caractérisé en ce que les lentilles, la diode photo-émissive et la diode photoréceptrice respectivement sont enfermées dans les tubes opaques à la longueur d'onde du rayonnement d'illumination et formant monture, les tubes présentant à une de leur extrémité une ouverture suffisante pour permettre l'application de ces derniers sur la face premier milieu de la paroi en vis-à-vis de la zone d'illumination de référence.

10. Dispositif selon l'une des revendications précédentes, caractérisé en ce que l'une des substances étrangères est une substance solide liquide ou pâteuse déposée ou précipitée sur la face deuxième milieu de la paroi, notamment dans la zone d'illumination de référence (Z).

11. Dispositif selon l'une des revendications 1 à 10, caractérisé en ce qu'il comprend en outre, côté face premier milieu de la paroi:

des deuxièmes moyens détecteurs directionnels (3) sensibles audit rayonnement électromagnétique et dont le cône de réception (30) permet au niveau de la face deuxième milieu de définir une zone (P) dite de réception adjacente à ladite zone d'illumination de référence (Z) la direction moyenne dudit cône de réception présentant, par rapport à la direction moyenne du faisceau d'illumination (10), une inclinaison telle que le volume ($V_2$) résultant de l'intersection du faisceau d'illumination et du cône de réception au delà de la face deuxième milieu de la paroi est maximum.

12. Dispositif selon la revendication 11, caractérisé en ce que le cône de réception (30) des deuxièmes moyens détecteurs (3) est sensiblement convergent à la réception.

13. Dispositif selon l'une des revendications 11 ou 12, caractérisé en ce que les deuxièmes moyens détecteurs (3) comportent:

une lentille de focalisation (31),

une diode photoréceptrice (32) sensible au rayonnement dudit faisceau d'illumination et capable d'engendrer un signal électrique modulé à la fréquence de modulation du faisceau,

un filtré (301) de fréquence centrale centrée sur la valeur de la fréquence de modulation, et délivrant un signal filtré,

des moyens de détection capables d'engendrer un signal sensiblement continu représentatif de l'amplitude du signal filtré détecté.

14. Dispositif selon la revendication 13, caractérisé en ce que l'axe optique de la lentille de focalisation (31) des deuxièmes moyens détecteurs (3) et l'axe optique de la lentille de focalisation (11) des moyens d'illumination sont concourants et forment un angle $\beta$ inférieur à 15°.

15. Dispositif selon la revendication 14, caractérisé en ce que les axes des lentilles de focalisation des moyens d'illumination, des premiers et deuxièmes moyens de détection sont situés dans deux plans sécants distincts ou confondus dans un même plan.

16. Dispositif selon l'une des revendications 3 à 15, caractérisé en ce que les lentilles de focalisation des premiers moyens de détection et des moyens d'illumination ont sensiblement un même diamètre d'ouverture, la lentille de focalisation des deuxièmes moyens de focalisation ayant un diamètre d'ouverture supérieur à un rapport trois vis-à-vis du diamètre d'ouverture de la lentille de focalisation des moyens d'illumination.

17. Dispositif selon l'une des revendications 11 à 16, caractérisé en ce que le point d'intersection (I) des génératrices adjacentes dans le premier milieu du faisceau d'illumination et du cône de réception des deuxièmes moyens détecteurs est situé dans le deuxième milieu au voisinage de la face deuxième milieu de la paroi.

18. Dispositif selon la revendication 17, caractérisé en ce que lesdites génératrices adjacentes dans le premier milieu du faisceau d'illumination (10) et du cône de réception (30) des deuxièmes moyens détecteurs (3) sont physiquement séparées par une paroi (OP) opaque à la longueur d'onde du rayonnement d'illumination.

19. Dispositif selon la revendication 18, caractérisé en ce que ladite paroi (OP) est en forme de tube (100), ledit tube enveloppant en outre les deuxièmes moyens détecteurs (3) et présentant au niveau de ces derniers un blindage électromagnetique (1000).

20. Dispositif selon l'une des revendications 1 à 19, caractérisé en ce qu'une deuxième substance étrangère détectéee est une vapeur, un aèrosol ou particules solides en suspension dans le deuxième milieu, les premiers (2) et deuxièmes (3) moyens détecteurs étant couplés électroniquement de façon que le signal détecté délivré par les premiers moyens détecteurs (2) constitue un signal de correction de référence vis-à-vis du signal détecté délivré par les deuxièmes moyens détecteurs (3), le signal corrigé étant représentatif de la seule rétrodiffusion de faisceau d'illumination par ladite deuxième substance étrangère en suspension dans le deuxième milieu.

21. Dispositif selon l'une des revendications précédentes, caractérisé en ce que l'émission du rayonnement d'illumination est effectuée en lumière polarisée rectilignement à partir d'un polariseur, la réception au niveau des premiers et/ou deuxièmes moyens détecteurs (2) (3) étant effectuée au moyen d'un analyseur orienté de façon à provoquer une atténuation de l'énergie lumineuse reçue par réflexion sur la paroi (P).

22. Dispositif selon la revendication 22, caractérisé en ce que le faisceau d'illumination (10) est engendré par rapport à la paroi (P) sous incidence de Brewster, le polariseur ou les analyseurs étant alors supprimés.

23. Système d'aide à la conduite de véhicules caractérisé en ce qu'il comprend un dispositif de détection selon l'une des revendications 1 à 20 précédentes, un microprocesseur (500) de commande et de traitement des signaux délivrés par le dispositif de détection précités, ledit traitement étant effectué de manière à déterminer le coefficient de perte par transmission RS à partir d'un abaque ou réseau de valeurs, représentant la puissance reçue en fonction de RS et le coefficient de transmission K à partir d'un abaque ou réseau de valeurs représentant le puissance reçue en fonction de K pour différentes valeurs du coefficient RS exprimé en pour cent.

24. Système selon la revendication 23, caractérisé en ce que ledit microprocesseur (500) est relié à un circuit d'utilisation permettant

la mise en fonctionnement du lave-glace à partir d'une valeur de seuil du coefficient RS,

la mise en fonctionnement du ou des feux anti-brouillard à partir d'une valeur de seuil du coefficient de transmission K.

25. Système selon la revendication 24, caractérisé en ce que l'intensité lumineuse du ou des feux anti-brouillard est modulée en fonction de la valeur du coefficient de transmission K et la cas échéant de la vitesse réelle du véhicule.

26. Système selon l'une des revendications 24 ou 25, caractérisé en ce que le circuit d'utilisation permet en outre d'afficher, pour le conducteur du véhicule, une vitesse conseillée en fonction de la visibilité.

27. Système selon l'une des revendications 23 à 26 précédentes, caractérisé en ce que l'électronique associée permet, à partir de l'information vitesse et de l'information visibilité, en fonction des caractéristiques nominales du véhicule, d'indiquer au conducteur:

que la vitesse est inférieure à la vitesse conseillée au moyen d'un voyant lumineux d'une première couleur,

que la vitesse est comprise entre la vitesse conseillée et la vitesse conseillée plus 10 km/h, au moyen d'un voyant lumineux d'une deuxième couleur,

que la vitesse est supérieure à la vitesse conseillée plus 10 km/h au moyen d'un voyant lumineux d'un troisième couleur,

que le système doit être nettoyé au moyen d'un voyant de maintenance (600).

28. Système selon la revendication 27, caractérisé en ce qu'une vignette (700) permet l'affichage en clair de la vitesse conseillée et de la distance de visibilité.

29. Système selon l'une des revendications 27 ou 28, caractérisé en ce que le compteur de vitesse comporte des diodes électroluminescentes (800 et 10 en 10 km/h, la vitesse conseillée en présence de brouillard étant indiquée par l'une de ces diodes.

30. Système selon l'une des revendications 26 à 29, caractérisé en ce que un signal sonore de type "buzzer" est mis en action pour V supérieure à V conseillée plus 10 km/h.

31. Utilisation d'un dispositif de détection selon l'une des revendications 1 à 22 précédentes, ou d'un système selon l'une des revendications 23 à 29, pour l'aide à la conduite de véhicules ou d'aéronefs ou pour la conduite de processus indstriel.

32. Utilisation selon la revendication 31, caractérisé en ce que dans le cas de l'aide à la conduite de véhiculers, celui-ci est remplacé par un poste fixe destiné à l'aide à la conduite de véhicules.

**Patentansprüche**

1. Vorrichtung zum Erfassen von fremden Substanzen in der Umgebung der Fläche einer Trennwand (P) zwischen einem ersten (I) und einem zweiten Bereich (II), wobei sich die Substanzen in dem ersten oder dem zweiten Bereich befinden, dadurch gekennzeichnet, daß sie auf der Seite des ersten Bereiches der Wand

eine Einrichtung (1) zum Beleuchten der Wand mit einer Quelle für elektromagnetische Strahlung, deren Wellenlänge der Transparenz oder der Halbtransparenz des wesentlichen Materials der Wand entspricht, wobei die Einrichtung die Außenfläche der Wand durch ein Strahlenbündel (10) entsprechend einer Referenz-Beleuchtungszone (Z) beleuchten kann,

eine erste Richtungsfassungseinrichtung (2), empfindlich für die elektromagnetische Strahlung, deren Empfangskegel (20), auf der Höhe der Fläche des zweiten Bereiches der Wand, im wesentlichen die Referenz-Beleuchtungszone (Z) überdecken kann, wobei die mittlere Richtung des Empfangskegels in bezug auf die mittlere Richtung des Strahlenbündels eine solche Neigung ($\alpha$) aufweist, daß das Volumen ($V_1$) aus dem Schnittbereich des Strahlenbündels und des Empfangskegels jenseits der Fläche des zweiten Bereichs der Wand minimal ist, aufweist.

2. Vorrichtung nach Anspruch 1, dadurch gekennzeichnet, daß das Strahlenbündel (10) im wesentlichen zylindrisch ist.

3. Vorrichtung nach Anspruch 1 oder 2, dadurch gekennzeichnet, daß der Empfangskegel (20) der Erfassungseinrichtung (2) im wesentlichen auf die Empfangsstelle zu konvergent ist.

4. Vorrichtung nach einem der Ansprüche 1 bis 3, dadurch gekennzeichnet, daß das Strahlbündel (10) im wesentlichen monochromatisch ist.

5. Vorrichtung nach einem der Ansprüche 1 bis 4, dadurch gekennzeichnet, daß das Strahlenbündel (10) mit einer festgelegten Modulationsfrequenz amplitudenmoduliert ist.

6. Vorrichtung nach Anspruch 5, dadurch gekennzeichnet, daß die Erfassungseinrichtung (2)

eine Fokussierungslinse (21)

eine Photorezeptordiode (22), die empfindlich für die Strahlung des Strahlenbündels ist und eine elektrisches Signal erzeugen kann, das mit der Modulationsfrequenz des Bündels moduliert ist,

ein Mittenfrequenzfilter (301), das auf den Wert der Modulationsfrequenz eingestellt ist und ein gelfiltertes Signal abgibt,

eine Erfassungseinrichtung, die ein im wesentlichen andauerendes Signal erzeugen kann, welches repräsentativ für die Amplitude des erfaßten gefilterten Signal ist, umfaßt.

7. Vorrichtung nach Anspruch 6, dadurch gekennzeichnet, daß die Beleuchtungseinrichtung (1)

eine Photoemissionsdiode (12),

eine Fokussierungslinse (11) umfaßt, wobei die Photoemissionsdiode (12) und die Fokussierungslinse (11) so angeordnet sind, daß sie eine im wesentlichen zylindrisches Strahlenbündel (10) erzeugen.

8. Vorrichtung nach Anspruch 6 oder 7, dadurch gekennzeichnet, daß die optische Achse der Fokussierungslinse (21) der Erfassungseinrichtung (2) und die optische Achse der Fokussierungslinse(11) der Beleuchtungseinrichtung (1) unter einem Winkel α kleiner als 60° zusammenlaufen.

9. Vorrichtung nach einem der Ansprüche 6 bis 8, dadurch gekennzeichnet, daß die Linsen, die Photoemissionsdiode bzw. die Photorezeptordiode in lichtundurchlässige Röhren der Länge der Wellen der Lichtstrahlung eingeschlossen sind, die den Ausrüstungsrahmen bilden, wobei die Röhren an einem ihrer Enden eine Öffnung aufweisen, die ausreichend ist, um diese auf die Fläche im ersten Bereich der Wand gegenüber der Referenz-Beleuchtungszone anwenden zu können.

10. Vorrichtung nach einem der vorangehenden Ansprüche, dadurch gekennzeichnet, daß die eine der fremden Substanzen eine feste, flüssige oder pastenartige Substanz ist, die auf der zweiten Fläche mitten auf der wand aufgebracht oder niedergeschlagen ist, insbesondere in der Referenz-Beleuchtungszone (Z).

11. Vorrichtung nach einem der Ansprüche 1 bis 10, dadurch gekennzeichnet, daß sie weiterhin auf der Seite des ersten Bereiches der Wand

eine zweite Richtungserfassungseinrichtung (3) aufweist, die für elektromagnetische Strahlung empfindlich ist und deren Empfangskegel (30) es ermöglicht, auf der Höhe der Fläche des zweiten Bereiches eine Zone (P) des Empfangens benachbart zur Referenz-Beleuchtungszone (Z) zu definieren, wobei die mittlere Richtung des Empfangskegels in bezug auf die mittlere Richtung des Strahlenbündels (10) eine solche Neigung aufweist, daß das Volumen ($V_2$) aus dem Schnitt des Strahlenbündels und des Empfangskegels gegenüber der Fläche des zweiten Bereiches der Wand maximal ist.

12. Vorrichtung nach Anspruch 11, dadurch gekennzeichnet, daß der Empfangskegel (30) der zweiten Erfassungseinrichtung (3) im wesentlichen auf die Empfangsstelle zu konvergent ist.

13. Vorrichtung nach Anspruch 11 oder 12, dadurch gekennzeichnet, daß die zweite Erfassungseinrichtung (3)

eine Fokussierungslinse (31)

eine Photorezeptordiode (32), die empfindlich für die Strahlung des Strahlenbündels ist und eine elektrisches Signal erzeugen kann, das mit der Modulationsfrequenz des Bündels moduliert ist,

ein Mittenfrequenzfilter (301), das auf den Wert der Modulationsfrequenz eingestellt ist und ein gelfiltertes Signal abgibt,

eine Erfassungseinrichtung, die ein im wesentlichen andauerendes Signal erzeugen kann, welches repräsentativ für die Amplitude des erfaßten gefilterten Signal ist, umfaßt.

14. Vorrichtung nach Anspruch 13, dadurch gekennzeichnet, daß die optische Achse der Fokussierungslinse (31) der zweiten Erfassungseinrichtung (3) und die optische Achse der Fokussierungslinse (11) der Beleuchtungseinrichtung unter einem Winkel β kleiner als 15° zusammenlaufen.

15. Vorrichtung nach Anspruch 14, dadurch gekennzeichnet, daß die Achsen der Fokussierungslinsen der Beleuchtungseinrichtung der ersten und der zweiten Erfassungseinrichtung in zwei verschiedenen sich schneidenden Ebenen angeordnet oder in einer gemeinsamen Ebene zusammengelegt sind.

16. Vorrichtung nach einem der Ansprüche 3 bis 15, dadurch gekennzeichnet, daß die Fokussierungslinsen der ersten Erfassungseinrichtung und der Beleuchtungseinrichtung im wesentlichen einen gleichen Öffnungsdurchmesser haben, wobei die Fokussierungslinse der zweiten Fokussierungseinrichtung einen um der Faktor Drei größeren Öffnungsdurchmesser gegenüber dem Öffnungsdurchmesser der Fokussierungslinse der Beleuchtungseinrichtung hat.

17. Vorrichtung nach einem der Ansprüche 11 bis 16, dadurch gekennzeichnet, daß der Schnittpunkt (I) der benachbarten Mantellinien im ersten Bereich des Strahlbündels und des Empfangskegels der zweiten Erfassungseinrichtung im zweiten Bereich in der Umgebung der Fläche des zweiten Bereichs der Wand gelegt ist.

18. Vorrichtung nach Anspruch 17, dadurch gekennzeichnet, daß die benachbarten Mantellinien im ersten Bereich des Strahlenbündels (10) und des Empfangskegels (30) der zweiten Erfassungseinrichtung (3) räumlich durch eine für die Wellenlänge der Lichtstrahlen undurchlässige Wand (OP) getrennt sind.

19. Vorrichtung nach Anspruch 18, dadurch gekennzeichnet, daß die Wand (OP) in Form einer Röhre (100) ausgebildet ist, wobei die Röhre weiterhin die zweite Erfassungseinrichtung (3) einhüllt und auf deren Höhe eine elektromagnetische Abschirmung (1000) bildet.

20. Vorrichtung nach einem der Ansprüche 1 bis 19, dadurch gekennzeichnet, daß die zweite erfaßte fremde Substanz ein Gas, ein Aerosol oder Festteilchen in Suspension im zweiten Bereich ist, wobei die erste (2) und die zweite (3) Erfassungseinrichtung elektronisch so gekoppelt sind, daß das von der ersten Erfassungseinrichtung (2) abgegebene Erfassungssignal ein Referenz-Korrektursignal gegenüber dem von der zweiten Erfassungseinrichtung (3) abgegebenen Erfassungssignal bildet, wobei das Korrektursignal repräsentativ für die einzige Rückstreuung des Strahlenbündels durch die zweite fremde Substanz in Suspension im zweiten Bereich ist.

21. Vorrichtung nach einem der vorangehenden Ansprüche, dadurch gekennzeichnet, daß die Emission der Lichtstrahlen von geradlinig von einem Polaristor ausgehendem polarisiertem Licht bewirkt ist, wobei der Empfang in Höhe der ersten und/oder zweiten Erfassungseinrichtung (2) (3) mittels eines Analysators bewirkt wird, der so orientiert ist, daß eine Schwächung der Lichtenergie, die durch Reflexion von der Wand empfangen wird, begünstigt ist.

22. Vorrichtung nach Anspruch 21, dadurch gekennzeichnet, daß das Strahlenbündel (10) in bezug auf die Wand (P) unter Brewster-Einfall erzeugt wird, wodurch der Polarisator oder die Analysatoren unterdrückt sind.

23. Fahrhilfssystem für Fahrzeuge, dadurch gekennzeichnet, daß es eine Erfassungseinrichtung nach einem der vorangehenden Ansprüche 1 bis 20 aufweist, einen Mikroprozessor (500) zum Überwachen und Verarbeiten der von der Erfassungseinrichtung abgegebenen Signale, wobei das Verarbeiten so durchgeführt wird, daß der Verlustkoeffizient durch Transmission RS aus einer Tabelle oder einem Wertspeicher bestimmt wird, der die erhaltene Stärke in Abhängigkeit von RS angibt, und der Transmissionskoeffizient K aus einer Tabelle oder einem Wertspeicher, der die erhaltene Stärke als Funktion von K für verschiedene Werte des Koeffizienten RS ausgedrückt angibt.

24. System nach Anspruch 23, dadurch gekennzeichnet, daß der Mikroprozessor (500) mit einem Anwendungsschaltkreis verbunden ist, der

die Scheibenwaschanlage oberhalb eines Schwellwertes des Koeffizienten RS antreiben,

einen oder mehrere Nebelscheinwerfer oberhalb eines Schwellwertes für den Transmissionskoeffizienten K einschalten kann.

25. System nach Anspruch 24, dadurch gekennzeichnet, daß die Lichtintensität des oder der Nebelscheinwerfer(s) in Abhängigkeit vom Wert des Transmissionskoeffizienten K und gegebenenfalls von der tatsächlichen Geschwindigkeit des Fahrzeugs moduliert wird.

26. System nach Anspruch 24 oder 25, dadurch gekennzeichnet, daß der Anwendungsschaltkreis für den Fahrzeugführer eine empfohlene Geschwindigkeit in Abhängig keit von der Sichtweite anzeigen kann.

27. System nach einem der Ansprüche 23 bis 26, dadurch gekennzeichnet, daß die elektronische Struktur es erlaubt, ausgehend von der Geschwindigkeitsinformation und der Sichtweiteinformation, in Abhängigkeit von den nominalen Eigenschaften des Fahrzeuges, dem Fahrzeugführer anzuzeigen:

mittels einer Leuchtanzeige einer ersten zweiten Farbe, daß die Geschwindigkeit unterhalb der empfohlenen Geschwindigkeit liegt,

mittels einer Leuchtanzeige einer zweiten Farbe, daß die Geschwindigkeit zwischen der empfohlenen Geschwindigkeit und der empfohlenen Geschwindigkeit plus 10% liegt,

mittels einer Leuchtanzeige einer dritten Farbe, daß die Geschwindigkeit oberhalb der empfohlenen Geschwindigkeit plus 10% liegt,

mittels eine Daueranzeige, daß das System gereinigt werden muß.

28. System nach Anspruch 27, dadurch gekennzeichnet, daß eine Vignette (700) die Anzeige der empfohlenen Geschwindigkeit und der Sichtweite in Klarschrift erlaubt.

29. System nach Anspruch 27 oder 28, dadurch gekennzeichnet, daß der Geschwindigkeitmesser Elektrolumineszenz-Dioden (800) für jede 10 km/h aufweist, wobei die empfohlene Geschwindigkeit bei Nebel durch eine dieser Dioden angezeigt wird.

30. System nach einem der Ansprüche 26 bis 29, dadurch gekennzeichnet, daß ein Tonsignal von Typ "Sirene" gegeben wird, wenn V höher als das empfohlene V plus 10 km/h ist.

31. Verwendung einer Erfassungsvorrichtung nach einem der vorangehenden Ansprüche 1 bis 22 oder eines Systems nach einem der Ansprüche 23 bis 29 also Fahrhilfe für Fahrzeuge oder Luftfahrzeuge oder für die Führung industrieller Prozeßabläufe.

32. Verwendung nach Anspruch 31, dadurch gekennzeichnet, daß sie/es im Fall der Fahrhilfe für ein Fahrzeug durch ein Festbauteil zur Fahrhilfe für ein Fahrzeug ersetzt wird.

# EP 0 208 610 B1

**Claims**

1. Device for detecting the presence of foreign substances in the vicinity of the face of a separating wall (P) between a first (I) and a second medium (II), the substances being localized in the first or the second medium, characterized in that it comprises, on the first-medium-face side of the said wall:

means (1) for illuminating the said wall by means of a source of electromagnetic radiation, the wavelength of which corresponds to the transparency or to the semi-transparency of the material constituting the wall, the said means enabling the illumination of the outside face of the wall by an illuminating beam (10) along a reference illumination zone (Z),

first directional detecting means (2) sensitive to the said electromagnetic radiation and the reception cone (20) of which enables, at the second-medium face of the wall, substantial coverage of the said reference illumination zone (Z), the mean direction of the said reception cone having, relative to the mean direction of the illuminating beam, an inclination (a) such that the volume $(V_1)$ resulting from the intersection of the illuminating beam and the reception cone beyond the second-medium face of the wall is minimum.

2. Device according to Claim 1, characterized in that the illuminating beam (10) is substantially cylindrical.

3. Device according to one of Claims 1 or 2, characterized in that the reception cone (20) of the detecting means (2) is substantially convergent at the receiving end.

4. Device according to one of Claims 1 to 3, characterized in that illuminating beam (10) is substantially monochromatic.

5. Device according to one of Claims 1 to 4, characterized in that the illuminating beam (10) is amplitude-modulated at a specified modulation frequency.

6. Device according to Claim 5, characterized in that the detecting means (2) comprise:

a focusing lens (21)

a photoreceptive diode (22) sensitive to the radiation from the said illuminating beam and capable of generating an electrical signal which is modulated at the modulation frequency of the beam,

a central frequency filter (301) centred on the value of the modulation frequency, and delivering a filtered signal,

detection means capable of generating a substantially continuous signal representing the amplitude of the detected filtered signal.

7. Device according to Claim 6, characterized in that the illuminating means (1) comprise:

a photo-emissive diode (12)

a focusing lens (11), the photo-emissive diode (12) and the focusing lens (11) being arranged so as to generate a substantially cylindrical illuminating beam (10).

8. Device according to one of Claims 6 and 7, characterized in that the optical axis of the focusing lens (21) of the detecting means (2) and the optical axis of the focusing lens (11) of the illuminating means (1) are concurrent and form an angle a less than 60°.

9. Device according to one of Claims 6 to 8, characterized in that the lenses, the photo-emissive diode and the photoreceptive diode respectively are enclosed in the tubes which are opaque to the wavelength of the illuminating radiation and form a mounting, the tubes having at one end an opening sufficient to enable the application of these tubes onto the first-medium face of the wall opposite the reference illumination zone.

10. Device according to one of the preceding claims, characterized in that one of the foreign substances is a solid, liquid or pasty substance deposited or precipitated on the second-medium face of the wall, in particular in the reference illumination zone (Z).

11. Device according to one of Claims 1 to 10, characterized in that it further comprises, on the first-medium-face side of the wall:

second directional detecting means (3) sensitive to the said electromagnetic radiation and the reception cone (30) of which enables, at the second-medium face, definition of a so-called reception zone (P) adjacent to the said reference illumination zone (Z), the mean direction of the said reception cone having, relative to the mean direction of the illuminating beam (10), an inclination such that the volume $(V_2)$ resulting from the intersection of the illuminating beam and the reception cone beyond the second-medium face of the wall is maximum.

12. Device according to Claim 11, characterized in that the reception cone (30) of the second detecting means (3) is substantially convergent at the receiving end.

13. Device according to one of Claims 11 or 12, characterized in that the second detecting means (3) comprise:

a focusing lens (31)

a photoreceptive diode (32) sensitive to the radiation from the said illuminating beam and capable of generating an electrical signal which is modulated at the modulation frequency of the beam,

a central frequency filter (301) centred on the value of the modulation frequency, and delivering a filtered signal,

detection means capable of generating a substantially continuous signal representing the amplitude of the detected filtered signal.

14

14. Device according to Claim 13, characterized in that the optical axis of the focusing lens (31) of the second detecting means (3) and the optical axis of the focusing lens (11) of the illuminating means are concurrent and form an angle β less than 15°.

15. Device according to Claim 14, characterized in that the axes of the focusing lenses of the illuminating means, of the first and second detecting means are situated in two distinct secant planes or merged in one and the same plane.

16. Device according to one of Claims 3 to 15, characterized in that the focusing lenses of the first detecting means and of the illuminating means have substantially one and the same opening diameter, the focusing lens of the second focusing means having an opening diameter greater than a ratio of three in relation to the opening diameter of the focusing lens of the illuminating means.

17. Device according to one of Claims 11 to 16, characterized in that the point of intersection (I) of the adjacent generatrices, in the first medium, of the illuminating beam and of the reception cone of the second detecting means is situated in the second medium in the vicinity of the second-medium face of the wall.

18. Device according to Claim 17, characterized in that the said adjacent generatrices, in the first medium, of the illuminating beam (10) and of the reception cone (30) of the second detecting means (3) are physically separated by a wall (OP) which is opaque to the wavelength of the illuminating radiation.

19. Device according to Claim 18, characterized in that the said wall (OP) is in the form of a tube (100), the said tube further enveloping the second detecting means (3) and having, at the position of these latter, an electromagnetic shielding (1000).

20. Device according to one of Claims 1 to 19, characterized in that a second detecting foreign substance is a vapour, an aerosol or solid particles in suspension in the second medium, the first (2) and second (3) detecting means being electronically coupled in such a way that the detected signal delivered by the first detecting means (2) constitutes a reference correction signal in relation to the detected signal delivered by the second detecting means (3), the corrected signal being representative of only the backscattering of the illuminating beam by the said second foreign substance in suspension in the second medium.

21. Device according to one of the preceding claims, characterized in that the emission of the illuminating radiation is effected in rectilinearly polarized light from a polarizer, the reception at the first and/or second detecting means (2) (3) being effected by means of an analyser oriented in such a way as to cause attenuation of the light energy received by reflection on the wall (P).

22. Device according to Claim 21, characterized in that the illuminating beam (10) is generated under Brewster incidence relative to the wall (P), the polarizer or the analysers then being omitted.

23. System for aiding the driving of vehicles, characterized in that it comprises a detection device according to one of the preceding Claims 1 to 20, a microprocessor (500) for control and processing of the abovementioned signals delivered by the detection device, the said processing being effected in such a way as to determine the transmission loss coefficient RS from a chart or grid of values representing the power received as a function of RS, and the transmission coefficient K from a chart or grid of values representing the power received as a function of K for various values of the coefficient RS expressed as a percentage.

24. System according to Claim 23, characterized in that the said microprocessor (500) is connected to a utilization circuit enabling

the operation of the screen washer on the basis of a threshold value of the coefficient RS,

the operation of the anti-fog lamp or lamps on the basis of a threshold value of the transmission coefficient K.

25. System according to Claim 24, characterized in that the luminous intensity of the anti-fog lamp or lamps is modulated as a function of the value of the transmission coefficient K and, if relevant, of the actual speed of the vehicle.

26. System according to one of Claims 24 or 25, characterized in that the utilization circuit further enable display, for the driver of the vehicle, of an advised speed depending on the visibility.

27. System according to one of the preceding Claims 23 to 26, characterized in that the associated electronics enable, from the speed information and visibility information, depending on the nominal characteristics of the vehicle, indication to the driver:

that the speed is less than the advised speed, by means of a warning light of a first colour,

that the speed is between the advised speed and the advised speed plus 10 km/h, by means of a warning light of a second colour,

that the speed is greater than the advised speed plus 10 km/h, by means of a warning light of a third colour,

that the system must be cleaned, by means of a service light (600).

28. System according to Claim 27, characterized in that a vignette (700) enables the lucid display of the advised speed and of the visibility distance.

29. System according to one of Claims 27 or 28, characterized in that the speedometer comprises electroluminescent diodes (800) every 10 km/h, the advised speed in the presence of fog being indicated by one of these diodes.

30. System according to one of Claims 26 to 29, characterized in that a "buzzer" type sound signal is activated for V greater than advised V plus 10 km/h.

15

31. Use of a detection device according to one of the preceding Claims 1 to 22, or of a system according to one of Claims 23 to 29, for aiding the driving of vehicles or aircraft or for the conduct of industrial processes.

32. Use according to Claim 31, characterized in that, in the case of aiding the driving of vehicles, the latter case is replaced by a fixed post intended to aid the driving of vehicles.

FIG.1

FIG.2

1

FIG.3

FIG.4

2

FIG.5

FIG.6a

FIG.6b

FIG.6c

CORPS GRAS, INSECTES

FIG.7a

POUSSIERE

FIG.7b

FIG.7c

FIG-8a

CAPTEUR DE VITESSE

DETECTEUR

# FIG - 8b

| EMISSION MODULEE A Fo | ACQUISITIONS DES DONNEES ET TRAITEMENT |
|---|---|

E

| AMPLI FILTRE A Fo |
|---|

$R_M$

- COUPURE BREVE EMISSION
- SEUIL DE MAINTENANCE SUR RM
- EVALUATION DISTANCE DE VISIBILITE

| AMPLI FILTRE A Fo |
|---|

R

- COMPARAISON AVEC DISTANCE D'ARRET FONCTION DE VITESSE

| VITESSE VEHICULE INTERFACE |
|---|

- COMMANDE DES INDICATIONS

| ALIMENTATIONS PROTECTIONS | VOYANT VERT VOYANT ORANGE VOYANT ROUGE BUZZER |
|---|---|

FIG-9a

FIG-9b

**FIG-12**

TEMOINS D'ALERTE

**FIG-10**

LENTILLE

**FIG-11**

JAEGER

BONNE VITESSE   ATTENTION   DANGER